# EUROPEAN PATENT SPECIFICATION

(11) **EP 4 246 026 B1**
(45) Date of publication and mention of the grant of the patent: **09.07.2025**
(21) Application number: 23158307.1
(22) Date of filing: 23.02.2023
(51) Int. Cl.: F16K 11/00, F16K 27/00, E03C 1/04

(54) **NOVEL EMBEDDED THERMOSTATIC FAUCET**
NEUARTIGE EINGEBETTETE THERMOSTATISCHE ARMATUR
NOUVEAU ROBINET THERMOSTATIQUE INTÉGRÉ

(30) Priority: 17.03.2022 CN 202220594192 U
(43) Date of publication of application: 20.09.2023
(73) Proprietor: Yuhuan Xindeli Valve Co., Ltd., Yuhuan City, Taizhou Zhejiang 317609 (CN)
(72) Inventor: Guo, Zhengxing, Yuhuan (CN)
(74) Representative: Izquierdo Blanco, Maria Alicia

(56) References cited:
- EP-A1- 3 444 509
- EP-A1- 3 674 489
- EP-B1- 1 893 904
- CN-A- 114 183 562

## Description

### Technical Field

The utility model relates to a thermostatic faucet, in particular to a novel embedded thermostatic faucet.

### Description of Related Art

A thermostatic faucet body is a mounting body of a thermostatic faucet, and a hot water channel for hot water flow and a cold-water channel for cold water flow inside the thermostatic faucet are arranged in the mounting body. When the thermostatic faucet is used, hot water enters the hot water channel by means of a hot water connector, cold water enters the cold water channel by means of a cold water connector, the hot water in the hot water channel and the cold water in the cold water channel eventually enter a thermostatic valve core and are mixed in the thermostatic valve core, and the water flows to a position where an opening and closing valve core is located. The traditional thermostatic faucet generally has three water outlet connectors, and the opening and closing valve core used for opening and closing the three water outlet connectors is located in an opening and closing hole where the three water outlet connectors converge. With the rotation of a rotary core of the opening and closing valve core, the opening state of the opening and closing valve core may be different, such that water enters different water outlet connectors and finally flows out of the water outlet connectors for use. The water outlet connectors are connected to water outlet devices such as a faucet nozzle and a shower.

Limited by the distribution of water channels inside, the traditional thermostatic faucet has three water outlet connectors located on front and rear sides and a lateral side of one end of the mounting body, and the water outlet connector arranged on the lateral side of the mounting body greatly increases the actual length of the mounting body, such that the mounting body has increased volume and enlarged space occupied, and is inconvenient in placement and mounting as a result. Moreover, in the actual use process of the thermostatic faucet, the mounting body is covered by a decorative cover capable of completely covering the mounting body. When the length of the mounting body increases due to the water outlet connector on the lateral side, the volume of the decorative cover also increases, which not only further increases the space occupied by the thermostatic faucet, but also seriously increases the processing cost of the decorative cover.
Document CN114183562A discloses a thermostatic faucet comprising the limitations above commented. Document EP3674489A1 discloses a thermostatic faucet comprising a plurality of modules wherein each module is provided for managing a specific function.
Document EP3444509A1 discloses a thermostatic faucet comprising the same limitations commented above.

In order to avoid backflow in the hot water channel and the cold water channel and due to the limitation of the distribution of the hot water channel and the cold water channel in the traditional thermostatic faucet body, a check valve is mounted at a position where the hot water channel is in communication with the thermostatic valve core and a position where the cold water channel is in communication with the thermostatic valve core respectively, resulting in that the two check valves are located on the front and rear sides of the mounting body respectively, and the thermostatic valve core is located between the two check valves. When the two check valves are located on the front and rear sides of the mounting body respectively, the volume of the mounting body further increases.

### Summary

An existing technical problem to be solved by the utility model is to provide a novel embedded thermostatic faucet, which may ensure normal flow of cold and hot water and minimize a volume of a mounting body under the condition of normal water outlet, thus reducing space occupied and effectively reducing a volume of a decorative cover.

A technical solution used to solve the above technical problem by the utility model is as follows:
The utility model discloses a novel embedded thermostatic faucet, including a body, a hot water connector arranged on a front side of a left end of the body and a cold water connector arranged on a rear side of the left end of the body, where a hot water channel and a cold water channel are arranged in the body, an upper surface of a middle portion of the body is provided with a thermostatic hole, the hot water channel is in communication with the cold water channel by means of the thermostatic hole, an upper surface of a right end of the body is provided with an opening and closing hole, the opening and closing hole is in communication with the thermostatic hole by means of a water mixing channel, a matching thermostatic valve core is arranged in the thermostatic hole, a matching opening and closing valve core is arranged in the opening and closing hole, a front water outlet connector is arranged on a front side of the right end of the body, and a rear water outlet connector is arranged on a rear side of the right end of the body; a water outlet port is arranged on an upper surface of the left end of the body, and a left water outlet channel in communication with the water outlet port is arranged in the left end of the body; a right water outlet channel is arranged in a lower portion of the right end of the body, and an upper end of the right water outlet channel is in communication with the opening and closing hole by means of a first water passing hole; a lower water outlet channel is arranged on an inner lower side of the body, and a lower end of the right water outlet channel is in communication with a lower end of the left water outlet channel by means of the lower water outlet channel; the front water outlet connector is in communication with the opening and closing hole by means of a second water passing hole; the rear water outlet connector is in communication with the opening and closing hole by means of a third water passing hole, and upper orifices of the first water passing hole, the second water passing hole and the third water passing hole are all located at a bottom of the opening and closing hole; and a lower end surface of the opening and closing valve core is attached to the bottom of the opening and closing hole, a positioning column is arranged on the lower end surface of the opening and closing valve core, and the bottom of the opening and closing hole is provided with a positioning hole matching with the positioning column.

The lower end surface of the opening and closing valve core is provided with a first water outlet hole in communication with the first water passing hole, a second water outlet hole in communication with the second water passing hole, and a third water outlet hole in communication with the third water passing hole.

The upper surface of the left end of the body is provided with a hot water check hole and a cold water check hole behind the hot water check hole; the hot water connector is in communication with the hot water channel by means of the hot water check hole, and the cold water connector is in communication with the cold water channel by means of the cold water check hole; and a matching hot water check valve is arranged in the hot water check hole, and a matching cold water check valve is arranged in the cold water check hole.

The hot water check valve is screwed in the hot water check hole, and the cold-water check valve is screwed in the cold-water check hole.

The thermostatic valve core is screwed in the thermostatic hole.

The opening and closing valve core is screwed in the opening and closing hole.

An inner wall of the water outlet port is provided with internal threads, and the water outlet port is provided with a sealing plug by means of the internal threads in a screwed manner.

The utility model has the following beneficial effects:
Compared with the prior art, the novel embedded thermostatic faucet according to the utility model is provided with the front water outlet connector, the rear water outlet connector and the water outlet port, so three water outlet positions may be obtained without arranging one of the water outlet positions on a lateral side of an end of the mounting body; the water outlet port is arranged on the upper surface of the left end of the mounting body, which may not increase an actual length of the mounting body or a height of the mounting body; and existence of the water outlet port does not affect the volume of the mounting body, thereby effectively avoiding occupation of large space by the mounting body due to the increase in the volume of the mounting body in the presence of three water outlet positions, effectively avoiding inconvenience in placement and mounting due to excessive space occupation of the mounting body, avoiding a large volume required by the decorative cover outside a mounting body having a too large volume, and effectively reducing cost of the decorative cover.

Compared with the prior art, according to the novel embedded thermostatic faucet in the structure of the utility model, the hot water check valve arranged in the hot water check hole on the upper surface of the left end of the body and the cold water check valve arranged in the cold water check hole on the upper surface of the left end of the body may still achieve check effects, the hot water check valve and the cold water check valve are not required to be arranged on the front side and the rear side of the mounting body, and the check valves that are no longer arranged on the outer side may not affect volumes on the front side and the rear side of the middle portion of the mounting body, thereby ensuring the check effect of the thermostatic faucet and further avoiding the volume increase of the mounting body.

### Brief description of the drawings

FIG. 1 is a cross-sectional view of a novel embedded thermostatic faucet of the utility model;
FIG. 2 is a three-dimensional diagram from one perspective of a novel embedded thermostatic faucet of the utility model;
FIG. 3 is a three-dimensional diagram from another perspective of a novel embedded thermostatic faucet of the utility model;
FIG. 4 is a schematic structural diagram of a novel embedded thermostatic faucet of the utility model; and
FIG. 5 is a three-dimensional diagram of an opening and closing valve core.

### Description of the embodiments

The present invention will be further described in detail below in conjunction with accompanying drawings and specific embodiments.

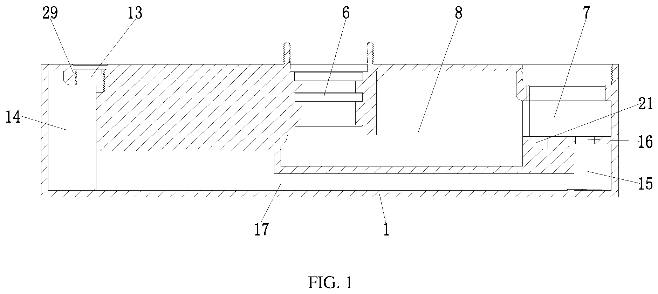

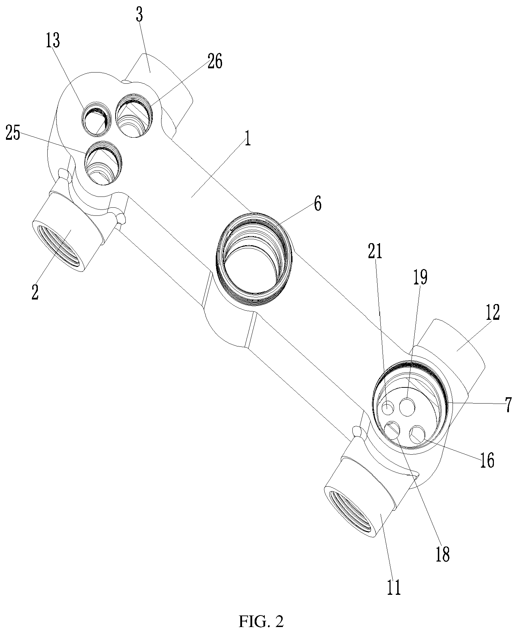

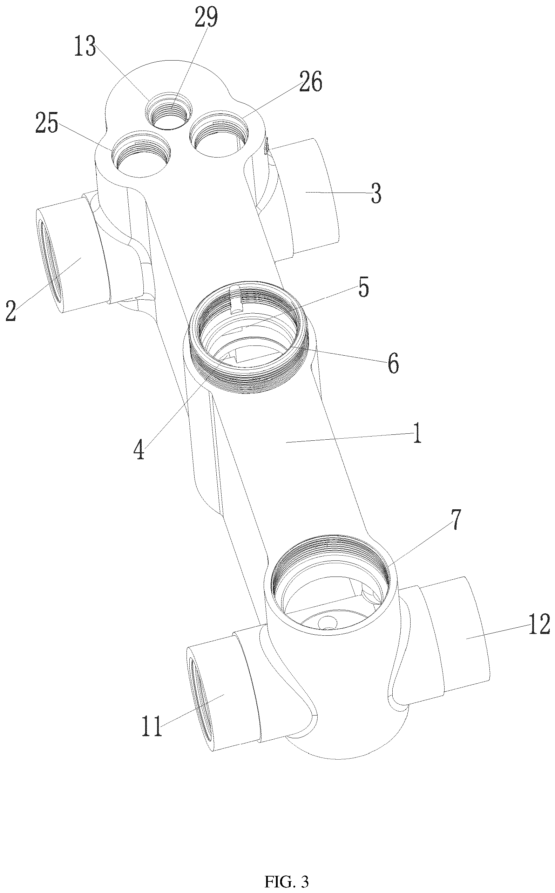

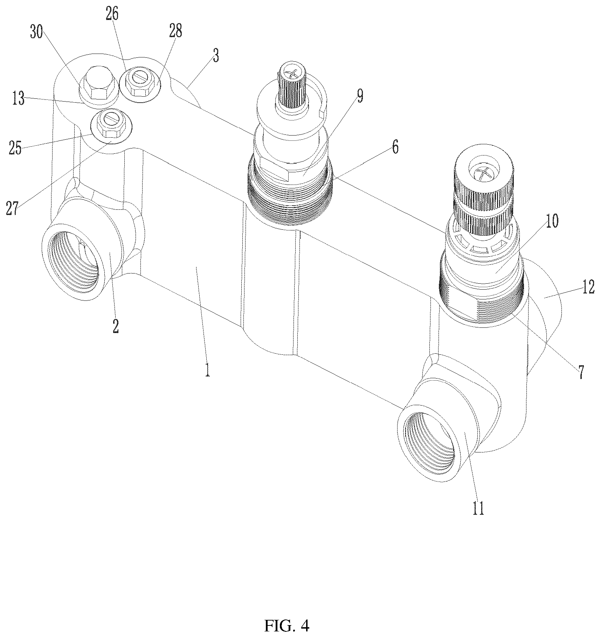

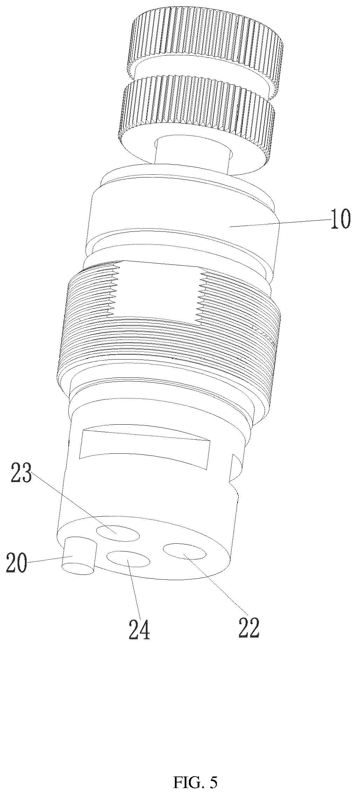

With reference to FIGs. 1 to 5, the utility model provides a novel embedded thermostatic faucet. The novel embedded thermostatic faucet includes a body 1, a hot water connector 2 arranged on a front side of a left end of the body 1 and a cold water connector 3 arranged on a rear side of the left end of the body 1, where a hot water channel 4 and a cold water channel 5 are arranged in the body 1, an upper surface of a middle portion of the body 1 is provided with a thermostatic hole 6, the hot water channel 4 is in communication with the cold water channel 5 by means of the thermostatic hole 6, an upper surface of a right end of the body 1 is provided with an opening and closing hole 7, the opening and closing hole 7 is in communication with the thermostatic hole 6 by means of a water mixing channel 8, a matching thermostatic valve core 9 is arranged in the thermostatic hole 6, a matching opening and closing valve core 10 is arranged in the opening and closing hole 7, a front water outlet connector 11 is arranged on a front side of the right end of the body 1, and a rear water outlet connector 12 is arranged on a rear side of the right end of the body 1; a water outlet port 13 is arranged on an upper surface of the left end of the body 1, and a left water outlet channel 14 in communication with the water outlet port 13 is arranged in the left end of the body 1; a right water outlet channel 15 is arranged in a lower portion of the right end of the body 1, and an upper end of the right water outlet channel 15 is in communication with the opening and closing hole 7 by means of a first water passing hole 16; a lower water outlet channel 17 is arranged on an inner lower side of the body 1, and a lower end of the right water outlet channel 15 is in communication with a lower end of the left water outlet channel 14 by means of the lower water outlet channel 17; the front water outlet connector 11 is in communication with the opening and closing hole 7 by means of a second water passing hole 18, the rear water outlet connector 12 is in communication with the opening and closing hole 7 by means of a third water passing hole 19, and upper orifices of the first water passing hole 16, the second water passing hole 18 and the third water passing hole 19 are all located at a bottom of the opening and closing hole 7; and a lower end surface of the opening and closing valve core 10 is attached to the bottom of the opening and closing hole 7, a positioning column 20 is arranged on the lower end surface of the opening and closing valve core 10 and the bottom of the opening and closing hole 7 is provided with a positioning hole 21 matching the positioning column 20.

The lower end surface of the opening and closing valve core 10 is provided with a first water outlet hole 22 in communication with the first water passing hole 16, a second water outlet hole 23 in communication with the second water passing hole 18, and a third water outlet hole 24 in communication with the third water passing hole 19.

The upper surface of the left end of the body 1 is provided with a hot water check hole 25 and a cold water check hole 26 behind the hot water check hole 25; the hot water connector 2 is in communication with the hot water channel 4 by means of the hot water check hole 25, and the cold water connector 3 is in communication with the cold water channel 5 by means of the cold water check hole 26; and a matching hot water check valve 27 is arranged in the hot water check hole 25, and a matching cold water check valve 28 is arranged in the cold water check hole 26.

The hot water check valve 27 is screwed in the hot water check hole 25, and the cold-water check valve 28 is screwed in the cold-water check hole 26.

The thermostatic valve core 9 is screwed in the thermostatic hole 6.

The opening and closing valve core 10 is screwed in the opening and closing hole 7.

An inner wall of the water outlet port 13 is provided with internal threads 29, and the water outlet port 13 is provided with a sealing plug 30 by means of the internal threads 29 in a screwed manner.

A use method of the utility model is as follows.

Both the hot water check valve 27 and the cold-water check valve 28 are existing check valves and may achieve automatic check effects.

Because the hot water connector 2 is in communication with the hot water channel 4 by means of the hot water check hole 25, when hot water flows to the hot water channel 4 through the hot water connector 2, the hot water is bound to pass through the hot water check valve 27. If backflow occurs in the hot water channel 4, the hot water check valve 27 automatically prevents the hot water from flowing back.

Because the cold-water connector 3 is in communication with the cold-water channel 5 by means of the cold-water check hole 26, when cold water flows to the cold-water channel 5 through the cold-water connector 3, the cold water is bound to pass through the cold-water check valve 28. If backflow occurs in the cold-water channel 5, the cold-water check valve 28 automatically prevents the cold water from flowing back.

Therefore, the hot water check valve 27 arranged in the hot water check hole 25 on the upper surface of the left end of the body 1 and the cold water check valve 28 arranged in the cold water check hole 26 on the upper surface of the left end of the body 1 may still achieve check effects, the hot water check valve 27 and the cold water check valve 28 are not required to be arranged on the front side and the rear side of the mounting body, and the check valves that are no longer arranged on the outer side may not affect the volumes on the front side and the rear side of the middle portion of the mounting body, thereby ensuring the check effect of the thermostatic faucet and further avoiding the volume increase of the mounting body.

When the thermostatic faucet is used, hot water flows into the thermostatic valve core 9 through the hot water connector 2, the hot water check valve 27 in the hot water check hole 25 and the hot water channel 4 in turn, cold water flows into the thermostatic valve core 9 through the cold water connector 3, the cold water check valve 28 in the cold water check hole 26 and the cold water channel 5 in turn, and finally the cold water and the hot water converge and mix in the thermostatic valve core 9. Under the condition that the thermostatic valve core 9 is opened, mixed water after the cold water and the hot water are mixed flows into the opening and closing valve core 10 in the opening and closing hole 7 through the water mixing channel 8, and a user may rotate a rotary core of the opening and closing valve core 10 with a hand wheel according to actual requirements, such that the first water outlet hole 22, the second water outlet hole 23 or the third water outlet hole 24 on the lower end surface of the opening and closing valve core 10 is opened. When the first water outlet hole 22 is opened, the mixed water in the opening and closing valve core 10 flows into the water outlet port 13 through the first water outlet hole 22, the first water passing hole 16, the right water outlet channel 15, the lower water outlet channel 17 and the left water outlet channel 14 in turn, and finally flows out for use by means of a water outlet device connected to the water outlet port 13. When the second water outlet hole 23 is opened, the mixed water in the opening and closing valve core 10 flows into the front water outlet connector 11 through the second water outlet hole 23 and the second water passing hole 18 in turn, and finally flows out for use through a water outlet device connected to the front water outlet connector 11. When the third water outlet hole 24 is opened, the mixed water in the opening and closing valve core 10 flows into the rear water outlet connector 12 through the third water outlet hole 24 and the third water passing hole 19 in turn, and finally flows out for use through a water outlet device connected to the rear water outlet connector 12.

To sum up, the utility model is provided with the front water outlet connector 11, the rear water outlet connector 12 and the water outlet port 13, so three water outlet positions may be obtained without arranging one of the water outlet positions on a lateral side of an end of the mounting body; the water outlet port 13 is arranged on the upper surface of the left end of the mounting body 1, which may not increase an actual length of the mounting body or a height of the mounting body; and existence of the water outlet port 13 does not affect the volume of the mounting body, thereby effectively avoiding occupation of large space by the mounting body due to the increase in the volume of the mounting body in the presence of three water outlet positions, effectively avoiding inconvenience in placement and mounting due to excessive space occupation of the mounting body, avoiding a large volume required by the decorative cover outside a mounting body having a too large volume, and effectively reducing cost of the decorative cover.

If the mixed water needs to flow out through the water outlet port 13, the mixed water needs to pass through the water mixing channel 8, the right water outlet channel 15, the lower water outlet channel 17, and the left water outlet channel 14 in turn. A flow track of water is equivalent to flowing to the right first, then down, to the left, and finally up to form a circuitous flow track, which may not only effectively change the position of the water outlet port 13, and avoid increase of the actual volume of the mounting body in the presence of the water outlet port 13, but also may achieve a noise reduction effect during water flow and avoid noise that is easy to form when the water flows in straight channels.

A positioning column 20 is arranged on the lower end surface of the opening and closing valve core 10, the bottom of the opening and closing hole 7 is provided with a positioning hole 21 matching the positioning column 20, and cooperation between the positioning column 20 and the positioning hole 21 may position the opening and closing valve core 10 when the opening and closing valve core 10 is mounted in the opening and closing hole 7, thereby ensuring that the first water outlet hole 22 is in communication with the first water passing hole 16, the second water outlet hole 23 is in communication with the second water passing hole 18, and the third water outlet hole 24 is in communication with the third water passing hole 19.

The hot water check valve 27 is screwed in the hot water check hole 25, which facilitates disassembly and assembly of the hot water check valve 27 as well as maintenance and replacement of the hot water check valve 27. The cold-water check valve 28 is screwed in the cold-water check hole 26, which the disassembly and assembly of the cold water check valve 28 as well as maintenance and replacement of the cold water check valve 28.

The thermostatic valve core 9 is screwed in the thermostatic hole 6, which facilitates the disassembly and assembly of the thermostatic valve core 9 as well as maintenance and replacement of the thermostatic valve core 9.

The opening and closing valve core 10 is screwed in the opening and closing hole 7, which facilitates the disassembly and assembly of the opening and closing valve core 10 as well as maintenance and replacement of the opening and closing valve core 10.

The inner wall of the water outlet port 13 is provided with internal threads 29, which facilitate rapid connection of the water outlet port 13 to water outlet devices such as a faucet nozzle and a shower by means of screwing and facilitate disassembly of the water outlet devices. When the water outlet port 13 is not used, a sealing plug may be screwed by means of the internal threads 29, the sealing plug 30 may not only effectively plug and seal the water outlet port 13, but may, on account of a small size, effectively avoid the situation that the decorative cover may not normally cover the mounting body due to a large bulge at the water outlet port 13 during sealing.

## Claims

1. An embedded thermostatic faucet, comprising a body (1), a hot water connector (2) formed on a front side of a left end of the body and a cold water connector (3) formed on a rear side of the left end of the body, wherein a hot water channel (4) and a cold water channel (5) are formed in the body, an upper surface of a middle portion of the body is provided with a thermostatic hole (6), the hot water channel (4) is in communication with the cold water channel (5) by means of the thermostatic hole (6), an upper surface of a right end of the body is provided with an opening and closing hole (7), the opening and closing hole is in communication with the thermostatic hole (6) by means of a water mixing channel (8), a matching thermostatic valve core (9) is arranged in the thermostatic hole (6), a matching opening and closing valve core (10) is arranged in the opening and closing hole (7), a front water outlet connector (11) is formed on a front side of the right end of the body, and a rear water outlet connector (12) is formed on a rear side of the right end of the body; a water outlet port (13) is formed on an upper surface of the left end of the body, and a left water outlet channel (14) in communication with the water outlet port (13) is formed in the left end of the body; a right water outlet channel (15) is formed in a lower portion of the right end of the body, and an upper end of the right water outlet channel (15) is in communication with the opening and closing hole (7) by means of a first water passing hole (16); a lower water outlet channel (17) is formed on an inner lower side of the body, and a lower end of the right water outlet channel (15) is in communication with a lower end of the left water outlet channel (14) by means of the lower water outlet channel (17); the front water outlet connector (11) is in communication with the opening and closing hole (7) by means of a second water passing hole (18), the rear water outlet connector (12) is in communication with the opening and closing hole (7) by means of a third water passing hole (19), and upper orifices of the first water passing hole (16), the second water passing hole (18) and the third water passing hole (19) are all located at a bottom of the opening and closing hole (7); and a lower end surface of the opening and closing valve core (10 is attached to the bottom of the opening and closing hole (7), a positioning column (20) is formed on the lower end surface of the opening and closing valve core (10), and the bottom of the opening and closing hole (7) is provided with a positioning hole (21) matching the positioning column (20), **characterized in that**
the upper surface of the left end of the body is provided with a hot water check hole (25) and a cold water check hole (26) behind the hot water check hole (25);
wherein
the hot water connector (2) is in communication with the hot water channel (4) by means of the hot water check hole (25), and
the cold water connector (3) is in communication with the cold water channel (5) by means of the cold water check hole (26); and
a matching hot water check valve (27) is arranged in the hot water check hole (25), and a matching cold water check valve (28) is arranged in the cold water check hole (26).

2. The embedded thermostatic faucet according to claim 1, wherein the lower end surface of the opening and closing valve core (10) is provided with a first water outlet hole (22) in communication with the first water passing hole (16), a second water outlet hole (23) in communication with the second water passing hole (18), and a third water outlet hole (24) in communication with the third water passing hole (19).

3. The embedded thermostatic faucet according to claim 1, wherein the hot water check valve (27) is screwed in the hot water check hole (25). and the cold-water check valve (28) is screwed in the cold-water check hole (26).

4. The embedded thermostatic faucet according to claim 1, wherein the thermostatic valve core (9) is screwed in the thermostatic hole (6).

5. The embedded thermostatic faucet according to claim 1, wherein the opening and closing valve core (10) is screwed in the opening and closing hole (7).

6. The embedded thermostatic faucet according to claim 1, wherein an inner wall of the water outlet port (13) is provided with internal threads (29), and the water outlet port (13) is provided with a sealing plug (30) by means of the internal threads (29) in a screwed manner.

## Patentansprüche

1. Ein eingebetteter thermostatischer Wasserhahn, umfassend einen Körper (1), einen Warmwasseranschluss (2), der an der Vorderseite eines linken Endes des Körpers gebildet ist, und einen Kaltwasseranschluss (3), der an der Rückseite des linken Endes des Körpers gebildet ist, wobei im Körper ein Warmwasserkanal (4) und ein Kaltwasserkanal (5) gebildet sind, die obere Oberfläche eines mittleren Abschnitts des Körpers mit einem Thermostatloch (6) versehen ist, der Warmwasserkanal (4) mit dem Kaltwasserkanal (5) mittels des Thermostatlochs (6) in Verbindung steht, die obere Oberfläche eines rechten Endes des Körpers mit einem Öffnungs- und Schließloch (7) versehen ist, das Öffnungs- und Schließloch mittels eines Wassermischkanals (8) mit dem Thermostatloch (6) in Verbindung steht, ein passender thermostatischer Ventilkörper (9) im Thermostatloch (6) angeordnet ist, ein passender Öffnungs- und Schließventilkörper (10) im Öffnungs- und Schließloch (7) angeordnet ist, an der Vorderseite des rechten Endes des Körpers ein vorderer Wasserauslassanschluss (11) gebildet ist und an der Rückseite des rechten Endes des Körpers ein hinterer Wasserauslassanschluss (12) gebildet ist; an der oberen Oberfläche des linken Endes des Körpers eine Wasserauslassöffnung (13) gebildet ist, und im linken Ende des Körpers ein linker Wasserauslasskanal (14), der mit der Wasserauslassöffnung (13) in Verbindung steht; im unteren Bereich des rechten Endes des Körpers ein rechter Wasserauslasskanal (15) gebildet ist, dessen oberes Ende mittels eines ersten Wasserpassierlochs (16) mit dem Öffnungs- und Schließloch (7) in Verbindung steht; an der inneren Unterseite des Körpers ein unterer Wasserauslasskanal (17) gebildet ist, dessen unteres Ende mittels des unteren Wasserauslasskanals (17) mit dem unteren Ende des linken Wasserauslasskanals (14) in Verbindung steht; der vordere Wasserauslassanschluss (11) mittels eines zweiten Wasserpassierlochs (18) mit dem Öffnungs- und Schließloch (7) in Verbindung steht, der hintere Wasserauslassanschluss (12) mittels eines dritten Wasserpassierlochs (19) mit dem Öffnungs- und Schließloch (7) in Verbindung steht, und obere Öffnungen des ersten Wasserpassierlochs (16), des zweiten Wasserpassierlochs (18) und des dritten Wasserpassierlochs (19) sich alle am Boden des Öffnungs- und Schließlochs (7) befinden; und eine untere Endfläche des Öffnungs- und Schließventilkörpers (10) an dem Boden des Öffnungs- und Schließlochs (7) anliegt, auf der unteren Endfläche des Öffnungs- und Schließventilkörpers (10) eine Positioniersäule (20) gebildet ist, und am Boden des Öffnungs- und Schließlochs (7) ein Positionierloch (21) zur Aufnahme der Positioniersäule (20) vorgesehen ist, **dadurch gekennzeichnet, dass** die obere Oberfläche des linken Endes des Körpers hintereinander mit einem Warmwasser-Rückschlagloch (25) und einem Kaltwasser-Rückschlagloch (26) versehen ist; wobei der Warmwasseranschluss (2) mittels des Warmwasser-Rückschlaglochs (25) mit dem Warmwasserkanal (4) in Verbindung steht, und der Kaltwasseranschluss (3) mittels des Kaltwasser-Rückschlaglochs (26) mit dem Kaltwasserkanal (5) in Verbindung steht; und ein passendes Warmwasser-Rückschlagventil (27) im Warmwasser-Rückschlagloch (25) angeordnet ist, sowie ein passendes Kaltwasser-Rückschlagventil (28) im Kaltwasser-Rückschlagloch (26) angeordnet ist.

2. Der eingebettete thermostatische Wasserhahn nach Anspruch 1, wobei die untere Endfläche des Öffnungs- und Schließventilkörpers (10) mit einem ersten Wasserauslassloch (22) versehen ist, das mit dem ersten Wasserpassierloch (16) in Verbindung steht, einem zweiten Wasserauslassloch (23), das mit dem zweiten Wasserpassierloch (18) in Verbindung steht, und einem dritten Wasserauslassloch (24), das mit dem dritten Wasserpassierloch (19) in Verbindung steht.

3. Der eingebettete thermostatische Wasserhahn nach Anspruch 1, wobei das Warmwasser-Rückschlagventil (27) im Warmwasser-Rückschlagloch (25) eingeschraubt ist und das Kaltwasser-Rückschlagventil (28) im Kaltwasser-Rückschlagloch (26) eingeschraubt ist.

4. Der eingebettete thermostatische Wasserhahn nach Anspruch 1, wobei der thermostatische Ventilkörper (9) im Thermostatloch (6) eingeschraubt ist.

5. Der eingebettete thermostatische Wasserhahn nach Anspruch 1, wobei der Öffnungs- und Schließventilkörper (10) im Öffnungs- und Schließloch (7) eingeschraubt ist.

6. Der eingebettete thermostatische Wasserhahn nach Anspruch 1, wobei eine Innenwand der Wasserauslassöffnung (13) mit Innengewinden (29) versehen ist, und die Wasserauslassöffnung (13) mittels eines Dichtstopfens (30) durch die Innengewinde (29) verschraubt ist.

## Revendications

1. Un robinet thermostatique encastré, comprenant un corps (1), un raccord d'eau chaude (2) formé sur la face avant d'une extrémité gauche du corps et un raccord d'eau froide (3) formé sur la face arrière de l'extrémité gauche du corps, un canal d'eau chaude (4) et un canal d'eau froide (5) étant formés à l'intérieur du corps, une surface supérieure d'une partie médiane du corps étant pourvue d'un orifice thermostatique (6), le canal d'eau chaude (4) étant en communication avec le canal d'eau froide (5) par l'intermédiaire de l'orifice thermostatique (6), une surface supérieure de l'extrémité droite du corps étant pourvue d'un orifice d'ouverture et de fermeture (7), l'orifice d'ouverture et de fermeture étant en communication avec l'orifice thermostatique (6) par un canal de mélange d'eau (8), un noyau de vanne thermostatique (9) correspondant étant disposé dans l'orifice thermostatique (6), un noyau de vanne d'ouverture et de fermeture (10) correspondant étant disposé dans l'orifice d'ouverture et de fermeture (7), un raccord de sortie d'eau avant (11) étant formé sur la face avant de l'extrémité droite du corps, et un raccord de sortie d'eau arrière (12) étant formé sur la face arrière de l'extrémité droite du corps ; un orifice de sortie d'eau (13) étant formé sur la surface supérieure de l'extrémité gauche du corps, et un canal de sortie d'eau gauche (14) en communication avec l'orifice de sortie d'eau (13) étant formé dans l'extrémité gauche du corps ; un canal de sortie d'eau droit (15) étant formé dans une partie inférieure de l'extrémité droite du corps, et une extrémité supérieure du canal de sortie d'eau droit (15) étant en communication avec l'orifice d'ouverture et de fermeture (7) par l'intermédiaire d'un premier orifice de passage d'eau (16) ; un canal de sortie d'eau inférieur (17) étant formé sur une face intérieure inférieure du corps, et une extrémité inférieure du canal de sortie d'eau droit (15) étant en communication avec une extrémité inférieure du canal de sortie d'eau gauche (14) par le canal de sortie d'eau inférieur (17) ; le raccord de sortie d'eau avant (11) étant en communication avec l'orifice d'ouverture et de fermeture (7) par un deuxième orifice de passage d'eau (18), le raccord de sortie d'eau arrière (12) étant en communication avec l'orifice d'ouverture et de fermeture (7) par un troisième orifice de passage d'eau (19), et les orifices supérieurs du premier orifice de passage d'eau (16), du deuxième orifice de passage d'eau (18) et du troisième orifice de passage d'eau (19) étant tous situés au fond de l'orifice d'ouverture et de fermeture (7) ; et une face inférieure du noyau de vanne d'ouverture et de fermeture (10) est appliquée au fond de l'orifice d'ouverture et de fermeture (7), une colonne de positionnement (20) étant formée sur la face inférieure du noyau de vanne d'ouverture et de fermeture (10), et le fond de l'orifice d'ouverture et de fermeture (7) étant pourvu d'un trou de positionnement (21) correspondant à la colonne de positionnement (20), **caractérisé en ce que** la surface supérieure de l'extrémité gauche du corps est pourvue d'un orifice de contrôle d'eau chaude (25) et d'un orifice de contrôle d'eau froide (26) derrière l'orifice de contrôle d'eau chaude (25) ;
où :
le raccord d'eau chaude (2) est en communication avec le canal d'eau chaude (4) par l'intermédiaire de l'orifice de contrôle d'eau chaude (25), et
le raccord d'eau froide (3) est en communication avec le canal d'eau froide (5) par l'intermédiaire de l'orifice de contrôle d'eau froide (26) ; et
une soupape de contrôle d'eau chaude (27) correspondante est disposée dans l'orifice de contrôle d'eau chaude (25), et
une soupape de contrôle d'eau froide (28) correspondante est disposée dans l'orifice de contrôle d'eau froide (26).

2. Le robinet thermostatique encastré selon la revendication 1, dans lequel la face inférieure du noyau de vanne d'ouverture et de fermeture (10) est pourvue d'un premier orifice de sortie d'eau (22) en communication avec le premier orifice de passage d'eau (16), d'un deuxième orifice de sortie d'eau (23) en communication avec le deuxième orifice de passage d'eau (18), et d'un troisième orifice de sortie d'eau (24) en communication avec le troisième orifice de passage d'eau (19).

3. Le robinet thermostatique encastré selon la revendication 1, dans lequel la soupape de contrôle d'eau chaude (27) est vissée dans l'orifice de contrôle d'eau chaude (25), et la soupape de contrôle d'eau froide (28) est vissée dans l'orifice de contrôle d'eau froide (26).

4. Le robinet thermostatique encastré selon la revendication 1, dans lequel le noyau de vanne thermostatique (9) est vissé dans l'orifice thermostatique (6).

5. Le robinet thermostatique encastré selon la revendication 1, dans lequel le noyau de vanne d'ouverture et de fermeture (10) est vissé dans l'orifice d'ouverture et de fermeture (7).

6. Le robinet thermostatique encastré selon la revendication 1, dans lequel la paroi intérieure de l'orifice de sortie d'eau (13) est pourvue d'un filetage intérieur (29), et l'orifice de sortie d'eau (13) est pourvu d'un bouchon d'étanchéité (30) vissé grâce au filetage intérieur (29).
